# EUROPEAN PATENT SPECIFICATION

(11) **EP 1 869 822 B1**
(45) Date of publication and mention of the grant of the patent: **06.09.2017**
(21) Application number: 06748958.3
(22) Date of filing: 31.03.2006
(51) Int. Cl.: H04L 9/00, H04L 29/06, H04W 12/06, H04L 9/08

(54) **METHOD AND DEVICE FOR MULTI-SESSION ESTABLISHMENT**
VERFAHREN UND VORRICHTUNG ZUM AUFBAU MEHRERER SITZUNGEN
PROCÉDÉ ET DISPOSITIF SERVANT À OUVRIR DES SESSIONS MULTIPLES

(30) Priority: 04.04.2005 US 98253; 18.11.2005 US 283554
(43) Date of publication of application: 26.12.2007
(73) Proprietor: Cisco Technology, Inc., San Jose, CA 95134-1706 (US)
(72) Inventor: CAM WINGET, Nancy, Mountain View, California 94040 (US); KRISCHER, Mark, Pymble, New South Wales 2073 (AU); STIEGLITZ, Jeremy, Menlo Park, California 94024 (US)
(74) Representative: Noble, Nicholas
(86) International application number: PCT/US2006/011710
(87) International publication number: WO 2006/107713

(56) References cited:
- EP-A2- 1 343 345
- US-A1- 2003 163 733
- US-A1- 2003 204 608

## Description

### BACKGROUND OF THE INVENTION

The present invention relates generally to network security and more specifically for a system and method to enable a single device to establish multiple sessions with a single login.

Network security has become a business critical issue. As a result, there is a need for different applications and systems to authenticate to one another. These authentications occur in an isolated context and result in the establishment of multiple, secure, authenticated sessions.

For example, in the wireless context, an access point may run several different applications or subsystems. As a result, there is a need for the access point to authenticate several times. When multiplied across a network comprising hundreds of access points, this can significantly load the AAA (Authentication, Authorization and Accounting) servers.

Existing single sign-on systems tend to be an optimization on the user side, eliminating the need for the user to continuously log into different applications by hiding subsequent authentications from the user. Typically, the user performs a single login to "unlock" access to secure credentials. These credentials are then used by the single sign- on system to authenticate the user to other applications as required. For example, Kerberos, available from the Massachusetts Institute of Technology and many other commercial products, authenticate a user to a ticketing server. The user requests tickets for each application the user would like to use. When the user starts an application, the tickets are used to establish a secure session with each application by the single sign-on system. The user's device submits the ticket to the authenticator for the application, the authenticator then authenticates the ticket with the ticketing server. Thus, the device is still performing multiple authentications, even though authentications to applications are hidden from the user by the single sign-on system.

EP 1343345 discloses a system in which a mobile unit is fully authenticated in a first base station and, thereafter, the first base station transmits a "credential" to the mobile node that may be used by other base stations to establish trust with the mobile node prior to full re-authentication. US 2003/204608 discloses a method which provides authentication for data services for at least one UE using common authentication information based upon information stored in a HSS of a home network of the at least one UE for multiple protocols.

### BRIEF SUMMARY OF THE INVENTION

There is described herein a system and method that allows a device to complete a single successful authentication sequence to a AAA server or multiple AAA servers, resulting in as many secure sessions for the different applications or subsystems, for example as determined by either the client's identity, the AAA server's policy, the client's (e.g., AP's) configuration at the time of initialization or any combination thereof. There is disclosed herein a system and method that enables multi-session authentication requests to be split as needed between different authentication servers. In one embodiment the authentication server acts as a proxy for the other authenticators and sends requests to the disjoint authentication servers. Alternatively, the authentication server has global knowledge of other authenticators and can split the requests as needed to different authentication servers. Aggregation of the split requests can be used if any of the authentication servers are capable of handling multiple requests.

In accordance with an aspect of the present invention, there is described herein a method according to claim 1. Aspects of the present invention include computer readable medium of instructions according to claim 18. An aspect of the present invention is that it allows an additional subsystem on a device to immediately begin operating over the authenticated, secure session without the need for a full authentication exchange, thus reducing AAA server traffic.

In accordance with an aspect of the present invention, there is disclosed herein a method according to claim 10. In accordance with an aspect of the present invention, there is disclosed herein an authentication server according to claim 19. Still other objects of the present invention will become readily apparent to those skilled in this art from the following description wherein there is shown and described a preferred embodiment of this invention, simply by way of illustration of one of the best modes best suited for to carry out the invention. As it will be realized, the invention is capable of other different embodiments and its several details are capable of modifications in various obvious aspects all without departing from the invention as defined by the claims. Accordingly, the drawing and descriptions will be regarded as illustrative in nature and not as restrictive.

### BRIEF DESCRIPTION OF THE SEVERAL VIEWS OF THE DRAWING

The accompanying drawings incorporated in and forming a part of the specification, illustrates several aspects of the present invention, and together with the description serve to explain the principles of the invention.
FIG. 1 is a block diagram of a system in accordance with an aspect of the present invention.
FIG. 2 is a block diagram of a wireless local area network in accordance with a preferred embodiment of the present invention.
FIG. 3 is an exemplary network wherein an authentication server proxies authentication requests to additional authentication servers.
FIG. 4 is an exemplary network employing a server farm of authentication servers.
FIG. 5 is an exemplary network employing an authentication server and multiple authorization servers.
FIG. 6 is a block diagram of a computer system for implementing an aspect of the present invention.
FIG. 7 is a block diagram of a methodology in accordance with an aspect of the present invention.
FIG. 8 is a detailed block diagram of a methodology in accordance with an aspect of the present invention.
FIG. 9 is a block diagram of a methodology for multi-session establishment.

### DETAILED DESCRIPTION OF INVENTION

Throughout this description, the preferred embodiment and examples shown should be considered as exemplars, rather than limitations, of the present invention. The present invention provides a solution for providing securely authenticated multi-session establishment for a single device, eliminating the need for several redundant authentication exchanges. A device completes a single complete authentication sequence to a AAA server resulting in as many secure sessions required for the different applications or subsystems determined by the client's identity and the AAA server's policy. As the device is authenticated, the AAA server determines other sessions for the device. The AAA server generates session keys for the other sessions, sending one key to the other session and a corresponding key to the device, enabling the device to begin operating over the authenticated secure session without the need for a full authentication exchange.

The supplicant device is configured with logic to make it aware of the different subsystems it maintains, some of which may require authentication, as well as their relative priorities. "Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmable/programmed logic device, memory device containing instructions, or the like, or combinational logic embodied in hardware. Logic may also be fully embodied as software.

When the supplicant begins the authenticated session establishment for the predefined "initial" subsystem, a list of additional authenticated sessions is employed to indicate the additional sessions. In one embodiment, the list is appended by the supplicant during login to the authentication server. In another embodiment, the list is stored at the authentication server.

The AAA server is configured with logic to recognize the list of additional sessions for the supplicant. The AAA server is responsive to the list to send additional session keys to the authenticator for the additional sessions. The AAA server will also send a session key to the supplicant and initial authenticator, which may be sent concurrently or separately from the session keys for the additional sessions.

Authenticators are configured with logic to handle session establishment when prompted by the AAA server, such as in the form of a session key, rather than in the form of an authentication request from the supplicant. This allows additional subsystems on the device to immediately begin operating using an authenticated, secure session while obviating the need for a full authentication exchange.

An aspect of the present invention is that it reduces the load to the device performing the authentications as well as the load on the AAA server, which must perform the authentication for each session. The present invention also reduces the number of messages required to handle all the authentication sequences thereby reducing network traffic as well.

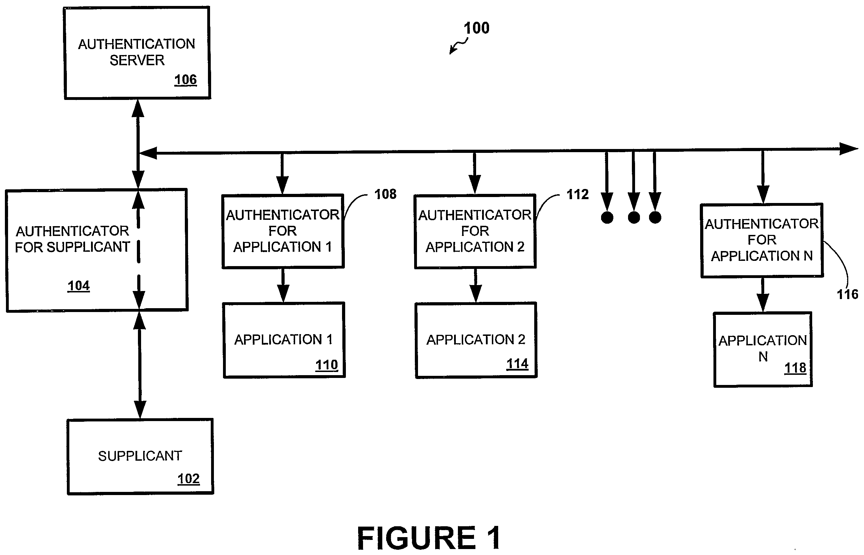

Referring now to FIG. 1, there is illustrated a block diagram of a system 100 in accordance with an aspect of the present invention. Supplicant 102 communicates bi-directionally with authenticator 104. In a preferred embodiment, supplicant 102 is a client desiring access to a network via authenticator 104. Authenticator 104 communicates bi-directionally with authentication server 106. In a preferred embodiment, authentication server 106 is an AAA (Authentication, Authorization and Accounting) server, such as a RADIUS (Remote Authentication Dial-In User Service, RFC 2865) server. In addition, either authenticator 104, authentication server 106 or both bi-directionally communicates with authenticators 108, 112 ... and 116 for additional application 1, 110, application 2, 114 ... and application N, 118 respectively. From a logical perspective, each application has its own authenticator. However, for applications that are co-located on the same device it is possible, but not necessary, for the authenticators to be the same code running on the same box, having individual contexts for each separate authentication session.

When supplicant 102 first connects with the network, authenticator 104 has logic that only allows authentication request messages to be passed between supplicant 102 and authentication server 106. Until supplicant 102 is authenticated, sessions with application 1, 108, application 2, 110, ... , application N, 112, are inhibited by logic in wireless switch 204. When authentication server 106 authenticates supplicant 102, logic in the authentication server sends keying material for the session to authenticator 104 and supplicant 102.

In addition, either concurrent with the authentication process or as a separate process, logic in authentication server 106 determines at least one other session for supplicant 102, e.g., application 1, 108, application 2, 110, ... , application N, 112. In one embodiment, logic in supplicant sends a list of additional sessions to the authentication server 106, for example added as Information Elements (IEs) as part of the message. Alternatively, authentication server 106 utilizes logic to retrieve a database entry for the server from a database accessible to the authentication server. The database preferably resides on authentication server 106, but can reside elsewhere.

There are several ways in which the sessions are generated from a single authentication contemplated by the present invention. The present invention contemplates that the method and means employed are understood by both the supplicant and the network infrastructure. Thus, the supplicant signals either authenticator 104 or authentication server 106 that it desires to establish these multiple sessions. Alternative embodiments are based upon whether the policy decision is made by authenticator 104 or the authentication server 106. But the logic is the same, that is, in the case of the supplicant being the AP, the AP must signal agreement of this through an added element to the 802.1X EAP authentication, the EAP method itself or it can be implicitly understood that all it's authentications will yield the multiple sessions. Authenticator 104 or authentication server 106 confirm that the AP is authorized to establish the multiple sessions before it initiates the multi-session establishment.

As authentication server 106 determines there is at least one other session for supplicant 102, authentication server 106 initiates a session with an authenticator for the at least one other session, such as an authenticator 108 for application 1, 110, authenticator 112 for application 2, 114, ... , and authenticator 116 for application N, 118.

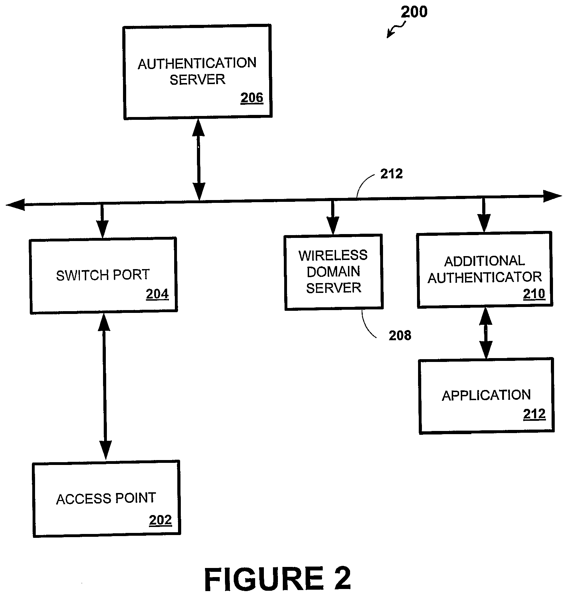

The sessions are established by generating unique new keying material that is passed to each session. This can be accomplished by (a) the authenticator 104 or authentication server 106 issues the keys and distributes them to both the supplicant and applications (via their authenticators); or (b) authenticator 104 or authentication server 106 mutually generate the session unique keys with the supplicant (for example an AP as shown in Figure 2) that are then distributed to the applications (via their authenticators).

For the former case where keys are derived by an endpoint, the endpoint may be supplicant 102, authentication server 106 (*e.g.,* an AS) or authenticator 104 (*e.g.,* a WDS). For the case where the endpoint is the supplicant 102, the supplicant 102 will signal after a successful authentication the keys it wishes to use with each application. An example of how this may be achieved with, for example, using EAP-FAST, would be to further ensue in EAP-TLV request response exchanges between the supplicant 102 and the authentication server 106 wherein the EAP-TLV request the supplicant provide all the session keys, each mapped to the specific application. Each key shall be keywrapped using the "master session key" or keying material mutually derived by the supplicant 102 and authentication server 106. Note that the EAP-TLV exchange is protected by the EAP-FAST tunnel. The authentication server 106 then decrypts the EAP-TLV as well as the applications and corresponding session keys. For each application, authentication server 106 shall then keywrap its corresponding session key for that supplicant using a shared secret it holds with the application and distribute the key. It shall do this for each application for which the supplicant has defined and the authentication server 106 has verified is authorized to establish the initiate session.

For the case where authentication server 106 generates the session keys for both supplicant 102 and authenticator 104, then authentication server 106 and supplicant 102 must retain the conversation used to authenticate to further provision these keys to the supplicant 102. Authentication server 106 will use the shared secret it shares with each application to keywrap the generated session key corresponding to the particular application and supplicant and distribute it to the application. Similarly, it shall keywrap the session key and application identifier and distribute this information in the conversation it still holds (for authenticating) with the supplicant.

For the latter case where keys are mutually derived, as an example, when using EAP authentication with methods such as EAP-TLS, PEAP and EAP-FAST where keying material is generated, this keying material can be used to generate cryptographically unique keys for each session. In these methods, the master secret key (per RFC 3748) or the EMSK (per draft-ietf-eap-keying-01.txt) to generate cryptographically unique keys for each application as follows:
- Given a master shared secret (MSK) from the resulting successful EAP method for each application including the "master" or originating application, named appl thru appn, their session keys can be generated as follows:
   - App1-session-key = hmac-sha1(msk, "Unique <unique application name here> session key derivation" ∥ App1-identity ∥ Supplicant-identity ∥ <length of concatenated string>)
   - Appn-session-key = hmac-shal(msk, "Unique <name the application n> session key derivation" ∥ App1-identity ∥ Supplicant-identity <length of concatenated string>)
   - Where ∥ denotes concatenation
   - Where <unique application name here> is a unique lable identifier for that application and must be distinct from all other applications
   - Where <length of concatenated string> is the total length of the string generated by the concatenations.

FIG. 2 is a block diagram of a wireless local area network 200 in accordance with a preferred embodiment of the present invention. As shown, access point 202 is the supplicant and switch port 204 is the authenticator for access point 202. Switch port 204 communicates bi-directionally with access point 202. Switch port 204 couples access point 202 to the backbone network 212. Backbone network 212 is suitably any wired network topology, wireless network topology, or combination thereof.

When access point 202 first desires to connect to network 212, it is authenticated by switch port 204 with authentication server 206. Until access point 202 is authenticated, switch port 204 exchanges authentication messages between access point 202 and authentication server 206 and blocks access point 202 from communicating with anything else connected to network 212.

Upon successfully authenticating access point 202, authentication server 206 generates a session key for communications between wireless switch 204 and access point 202. In a preferred embodiment, authentication server 206 also generates session keys for communications between access point 202 and wireless domain server 208.

Additionally, in accordance with an aspect of the present invention, authentication server 206 determines whether access point 202 should be authenticated with other applications coupled to network 212, such as application 212, which is authenticated by additional authenticator 210.

In operation, the 'central' or main authenticator, which is in this example is authentication server 206, determines which "applications" it may also need to establish sessions for access point 202. Access point 202 is first authenticated to WDS (wireless domain server, or controller) 208. However access point 202 is also authenticated to the switch port 204 that it is connected to as well as other servers it may need to establish sessions (such as a call manager or DHCP server, etc).

In a preferred embodiment, authentication server 206 is responsive to receive a list of additional sessions from access point 202, e.g., via an IE. In another preferred embodiment, authentication server 206 accesses a database to determine additional sessions.

For example, when authentication server 206 determines that access point 202 should establish a session with additional authenticator 210, authentication server 206 generates a session key the session between access point 202 and additional authenticator 210. Preferably, authentication server 206 determines the session between access point 202 and additional authenticator 210 during the authentication of access point 202. This would enable authentication server to send a single communication to access point 202 comprising a session key for switch port 204, a session key for wireless domain server 208, and a session key for additional authenticator 210. Authentication server 206 also sends session keys to switch port 204, wireless domain server 208 and additional authenticator 210 for access point 202.

Additional authenticator 210 is configured with logic that is responsive to receiving a session key from authentication server 206 to establish an authenticated, secure session with access point 202. This allows additional subsystems on access point 202 to immediately begin operating using an authenticated, secure session while obviating the need for a full authentication exchange with additional authenticator 210.

Although the above example illustrates the process for establishing multiple sessions for an access point, those skilled in the art can readily appreciate that the same process is adaptable for establishing multiple sessions for any device utilizing network 212. For example, the process can be used by a client (not shown) associating with access point 202, wherein access point 202 acts as the authenticator. As another example, the process can be used when authenticating switch port 204, or wireless domain server 208.

An aspect of the present invention is that it supports disjoint authentication server farms and disjoint policy or authorization servers. An aspect of the present invention is that it supports a system where different authenticators are actually supported by disjoint authentication servers, allowing the initial authentication server receiving the request to act as a proxy where a different authentication server services the request. An aspect of the present invention is that it supports a system where the authentication server is actually a server farm and for load balancing purposes the aggregated requests can be split among different individual servers. An aspect of the present invention supports a system where the authentication server obtains specific policy information from other (single or multiple) authorization server(s) from the different authenticators.

For example, Cisco Access Points, available from Cisco Technology, Inc., 170 West Tasman Drive, San Jose, CA 95134, contain multiple subsystems which need to authenticate to different authenticators. In large vertical environments, where large number of access points may come online simultaneously, this creates a huge burden on the AAA server infrastructure.

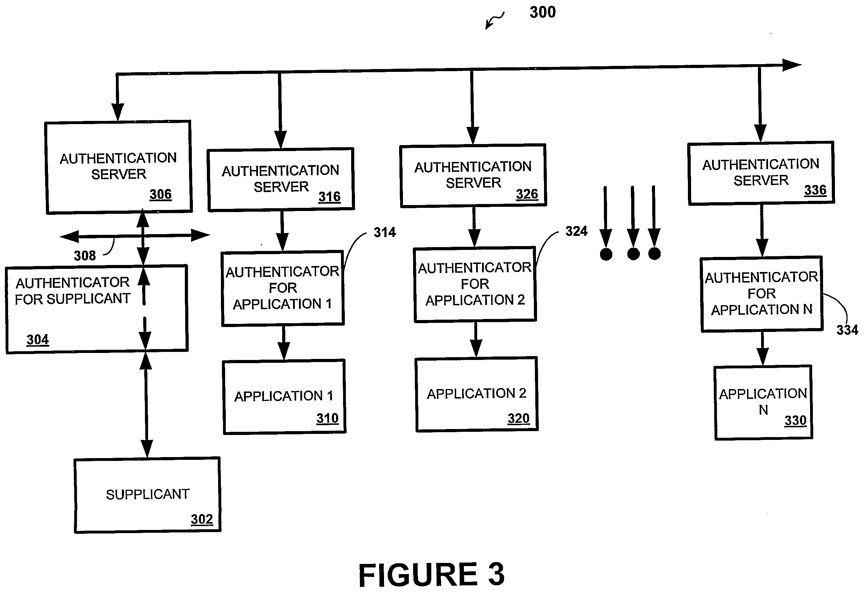

FIG. 3 is an exemplary network 300 wherein an authentication server 306 proxies authentication requests to additional authentication servers 316, 326, 336. Supplicant 302 initiates a session by sending a request to authenticator 304. Supplicant 302 communicates bi-directionally with authenticator 304. In a preferred embodiment, supplicant 302 is a client desiring access to a network 306 (e.g. a distribution network) via authenticator 304. Authenticator 304 communicates bi-directionally with authentication server 306. In a preferred embodiment, authentication server 306 is a AAA (Authentication, Authorization and Accounting) server, such as a RADIUS (Remote Authentication Dial-in User Service, RFC 2865) server.

When supplicant 302 first connects with the network, authenticator 304 has logic that only allows authentication request messages to be passed between supplicant 302 and authentication server 306. "Logic", as used herein, includes but is not limited to hardware, firmware, software and/or combinations of each to perform a function(s) or an action(s), and/or to cause a function or action from another component. For example, based on a desired application or need, logic may include a software controlled microprocessor, discrete logic such as an application specific integrated circuit (ASIC), a programmable/programmed logic device, memory device containing instructions, or the like, or combinational logic embodied in hardware. Logic may also be fully embodied as software. Until supplicant 302 is authenticated, sessions with application 1, 310, application 2, 320, ... , application N, 330, are inhibited by logic in authenticator 304. When authentication server 306 authenticates supplicant 302, logic in authentication server 306 sends keying material for the session to authenticator 304 and supplicant 302.

In addition, either concurrent with the authentication process or as a separate process, logic in authentication server 306 determines at least one other session for supplicant 302, *e.g.,* application 1, 310, application 2, 320, ... , application N, 330. In one embodiment, logic in supplicant 302 sends a list of additional sessions to the authentication server 306, for example added as Information Elements (IEs) as part of the message. Alternatively, authentication server 306 utilizes logic to retrieve a database entry for the server from a database accessible to the authentication server. The database preferably resides on authentication server 306, but can reside elsewhere as long as it is accessible by authentication server 306.

There are several ways in which the sessions are generated from a single authentication contemplated by the present invention. The present invention contemplates that the method and means employed are understood by both the supplicant and the network infrastructure. Thus, the supplicant signals either authenticator 304 or authentication server 306 that it desires to establish these multiple sessions. Alternative embodiments are based upon whether the policy decision is made by authenticator 304 or the authentication server 306. But the logic is the same, that is, for example in the case of the supplicant being an AP, the AP must signal agreement of this through an added element to the 802.1X EAP authentication, the EAP method itself or it can be implicitly understood that all it's authentications will yield the multiple sessions. Authenticator 304 or authentication server 306 confirm that the AP is authorized to establish the multiple sessions before it initiates the multi-session establishment.

As authentication server 306 determines there is at least one other session for supplicant 302, authentication server 306 acts as a proxy and initiates a session with an authenticator server for the at least one other session, such as an authentication server 316 for application 1, 310, authentication server 326 for application 2, 320, ... , and authentication server 336 for application N, 330. Thus, to establish the at least one other session with one or more of applications 310, 320, 330, authentication server 306 communicates with the corresponding authentication server 316, 326, 336 as opposed to the authenticator 314, 324, 334.

The sessions are established by generating unique new keying material that is passed to each session. This can be accomplished by any one of several suitable techniques. For example, authentication server 306 can issue the keys and distribute them to both the supplicant 304 and applications 310, 320, 330 via their authentication servers 316, 326, 336 respectively. As another example, the keys can be derived by the authentication server 316, 326, 336 for the corresponding application 310, 320, 330, which would then distribute the key for the supplicant to authentication server 306 and the corresponding key for the application 310, 320, 330 to the application 310, 320, 330.

The following is an example of how network 300 can be utilized to support a large network. In this example supplicant 302 is a wireless access point (AP) and authenticator 304 is a wireless switch. When the supplicant (AP) 302 powers up, it contacts authenticator 304 to access distribution network 308. Authenticator 304 forwards the access request to authentication server 306. Authentication server 306 authenticates supplicant 302 (i.e. verifies who supplicant is) and determines whether supplicant 302 is authorized to access network 308.

In addition, if supplicant (AP) 302 needs to access additional applications (e.g. applications 310, 320, 330) then either supplicant (AP) sends a list of applications to authentication server 306 (e.g. via IEs coupled to the access request) or authentication server 306 determines what other applications supplicant 302 is authorized to access. Authentication server 306 then communicates with the authentication server associated with the application(s) (e.g. authentication servers 316, 326, 336 for applications 310, 320, 330 respectively). Keying material for the sessions between supplicant 302 and one or more of applications 310, 320, 330 can be generated by either authentication server 306, the authentication server 316, 326, 336 associated with the application 310, 320, 330, or can be mutually derived between authentication server 306 and the authentication server 316, 326, 336 associated with the application 310, 320, 330 respectively.

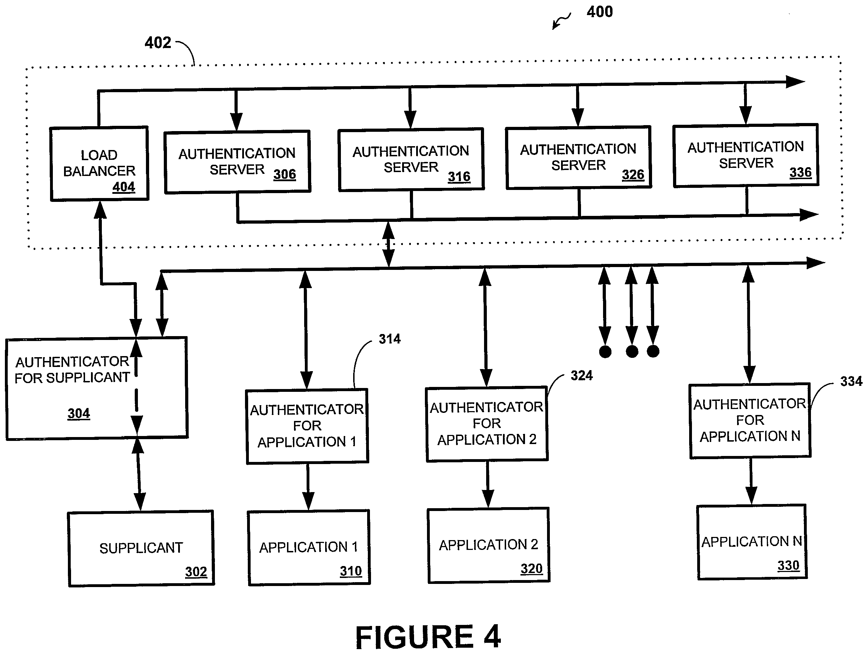

FIG. 4 is an exemplary network 400 employing a server farm 402 of authentication servers. In this example, supplicant 302 sends a request to access a network to authenticator 304. Authenticator 304 forwards the request to server farm 402, where one of authentication servers 306, 316, 326, 336 handles the request. Optionally, server farm 402 can employ a load balancer 404. Load balancer 404 comprises logic for determining the load on authentication servers 306, 316, 326, 336 and directs the authentication request to one of authentication servers 306, 326, 326, 336 based on their current load.

In the server farm example, any one of authentication servers 306, 316, 326, 336 can act as an authentication server for authenticator 304 and/or for applications 310, 320, 330. Furthermore, if an authentication server 306, 3116, 326, 336 determines that its load is at a threshold level (e.g. at capacity or a certain percentage of capacity), it can pass off the request from supplicant 302 to another authentication server 306, 316, 326, 336. In addition, the authentication server 306, 316, 326, 336 handling the authentication request for supplicant 302 does not have to be the same server that initiates the session with one or more of applications 310, 320, 330.

As an example, if supplicant 302 is attempting to access network 400 and requires access to application N 330, authenticator 304 passes the request to server farm 402 where one of authentication servers 306, 316, 326, and 336 process the request from supplicant 302. For example, authentication server 306 can handle the request from supplicant 302. Authentication server 306 can determine that supplicant 302 has to establish a session with one of applications 310, 320, 330 (application 330 in this example). Authentication server 306 can determine this either by examining the request sent by supplicant 302 (e.g. a list can be attached, for example using TLVs) or using other means (e.g. a database accessible by authentication server 306). Authentication server 103 can initiate the session with supplicant 302 and application 330, or authentication server 306 can communicate with one of authentication serves 316, 326, 336 to initiate the session. Once the session has been initiated, keys can be exchanged between supplicant 302 and application 330. If authentication server 306 initiated the session, it can exchange both keys. If another authentication server, e.g. one of servers 316, 326, 336, initiated the session, that server can pass one key to the application 330 and the other key to authentication server 306 which forwards it to supplicant 302.

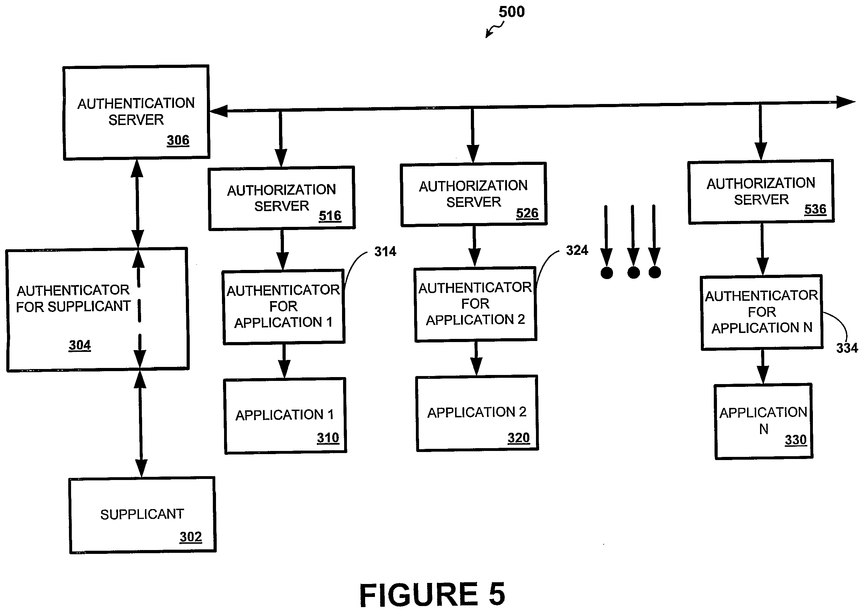

FIG. 5 is an exemplary network 500 employing an authentication server and multiple authorization (or policy) servers 516, 526, 536. In this example, supplicant 302 contacts authenticator 304 to request access to network 500. Authenticator 304, which authenticates supplicant 302, authenticates supplicant 302 with authentication server 306. Authentication server 306 then determines whether to establish additional sessions for supplicant 302, for example with one or more of applications 310, 320, 330. However, in this example, authentication server 306 authenticates supplicant 302, but authorization (or policy) servers 516, 526, 536 are employed to determine whether supplicant 302 is authorized for applications 310, 320, 330 respectively.

Thus, when authentication server 306 determines that additional sessions are being requested with one or more of applications 310, 320, 330 for supplicant 302, authentication server 306 determines via the corresponding authorization (or policy) server 516, 526, 536 whether supplicant 302 is authorized to access the application 310, 320, 330. Supplicant 302 can request access to applications 310, 320, 330 via a TLV or a list attached to its request to access network 500. Alternatively, authentication server 306 can maintain (or have access to) a database for determining additional sessions for supplicant 302.

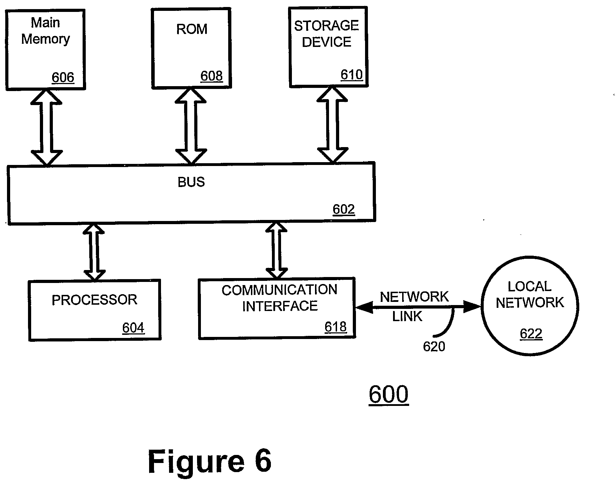

FIG. 6 is a block diagram of a computer system 600 for implementing an aspect of the present invention. For example, computer system 600 is suitable to be employed by at least one of supplicant 102, authenticator 104, authentication server 106, application 1, 108, application 2, 110, ..., and application N, 112 of Figure 1, and, access point 202, switch port 204, authentication server 206, wireless domain server 208 and additional authenticator 210 of Figure 2. For example, computer system 600 is suitable to be employed by at least one of supplicant 302, authenticator 304, authentication servers 306, 316, 326, 336 application 1, 310, application 2, 320, ..., and application N, 330 of Figure 3, and , load balancer 402 of Figure 4 and/or authorization servers 516, 526, 536 of Figure 5.

Computer system 600 includes a bus 602 or other communication mechanism for communicating information and a processor 604 coupled with bus 602 for processing information. Computer system 600 also includes a main memory 606, such as random access memory (RAM) or other dynamic storage device coupled to bus 602 for storing information and instructions to be executed by processor 604. Main memory 606 also may be used for storing a temporary variable or other intermediate information during execution of instructions to be executed by processor 604. Computer system 600 further includes a read only memory (ROM) 608 or other static storage device coupled to bus 602 for storing static information and instructions for processor 604. A storage device 610, such as a magnetic disk or optical disk, is provided and coupled to bus 602 for storing information and instructions.

An aspect of the invention is related to the use of computer system 600 for multi-session establishment for a single client. According to one embodiment of the invention, multi-session establishment for a single device is provided by computer system 600 in response to processor 604 executing one or more sequences of one or more instructions contained in main memory 606. Such instructions may be read into main memory 606 from another computer-readable medium, such as storage device 610. Execution of the sequence of instructions contained in main memory 606 causes processor 604 to perform the process steps described herein. One or more processors in a multi-processing arrangement may also be employed to execute the sequences of instructions contained in main memory 606. In alternative embodiments, hard-wired circuitry or an ASIC may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 604 for execution. Such a medium may take many forms, including but not limited to non-volatile media, volatile media, and transmission media. Non-volatile media include for example optical or magnetic disks, such as storage device 610. Volatile media include dynamic memory such as main memory 606. Transmission media include coaxial cables, copper wire and fiber optics, including the wires that comprise bus 602. Transmission media can also take the form of acoustic or light waves such as those generated during radio frequency (RF) and infrared (IR) data communications. Common forms of computer-readable media include for example floppy disk, a flexible disk, hard disk, magnetic cards, paper tape, any other physical medium with patterns of holes, a RAM, a PROM, an EPROM, a FLASHPROM, any other memory chip or cartridge, a carrier wave as described hereinafter, or any other medium from which a computer can read.

Computer system 600 also includes a communication interface 618 coupled to bus 602. Communication interface 618 provides a two-way data communication coupling to a network link 620 that is connected to a local network 622. For example, communication interface 618 may be an integrated services digital network (ISDN) card or a modem to provide a data communication connection to a corresponding type of telephone line. As another example, communication interface 618 may be a local area network (LAN) card to provide a data communication connection to a compatible LAN. Wireless links may also be implemented. In any such implementation, communication interface 618 sends and receives electrical, electromagnetic, or optical signals that carry digital data streams representing various types of information.

Network link 620 typically provides data communication through one or more networks to other data devices. For example, network link 620 may provide a connection through local network 622 to other computers (not shown).

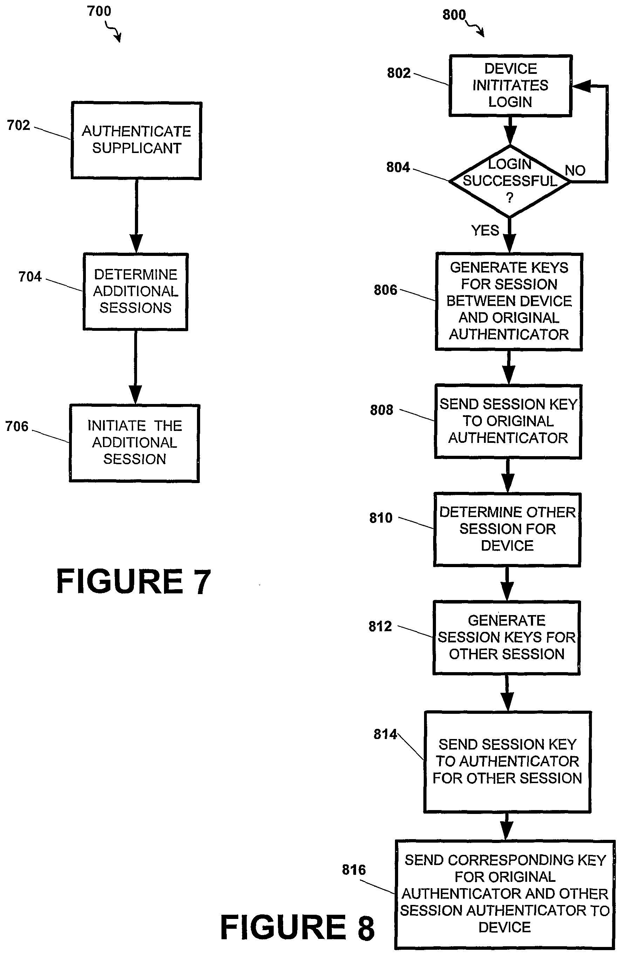

In view of the foregoing structural and functional features described above, a methodology in accordance with various aspects of the present invention will be better appreciated with reference to Figures 7-9. While, for purposes of simplicity of explanation, the methodology of Figures 7-9 are shown and described as executing serially, it is to be understood and appreciated that the present invention is not limited by the illustrated order, as some aspects could, in accordance with the present invention, occur in different orders and/or concurrently with other aspects from that shown and described herein. Moreover, not all illustrated features may be required to implement a methodology in accordance with an aspect the present invention. Embodiments of the present invention are suitably adapted to implement the methodology in hardware, software, or a combination thereof.

FIG. 7 is a block diagram of a methodology 700 to optimize authenticated multi-session establishment for a single supplicant in accordance with an aspect of the present invention. At 702, the supplicant is authenticated with an authentication server. For example, a supplicant initiates a session with an authenticator, the authenticator passing authentication messages between the supplicant and the authentication server to enable the supplicant to be authenticated by the authentication server.

At 704, it is determined whether there are any additional sessions for the supplicant. To determine the additional sessions, the supplicant may send a list of potential additional sessions to the authentication server, or the authentication server accesses a database containing session information for the supplicant.

At 706, the authentication server initiates the additional session for the supplicant with an authenticator for the additional session. The initiating comprises generating a session key pair for the session between the supplicant and the additional session, sending one of the session key pair to the supplicant and the other to the authenticator for the additional session. The authenticator for the additional session is responsive to receiving the key from the authentication server to establish an authenticated, secure session with the supplicant without additional authentication steps.

In a preferred embodiment, the authenticator for the additional session has already been authenticated with the authentication server. Otherwise, the authentication server authenticates the authenticator for the additional session.

In a preferred embodiment, the supplicant receives the key for its authenticator and the authenticator for the additional session at the same time. This minimizes the amount of traffic between the supplicant and the authentication server.

FIG. 8 is a detailed block diagram of a methodology 800 to optimize authenticated multi-session establishment for a single device in accordance with an aspect of the present invention. Methodology 800 begins at 802 when the device initiates login with its authenticator. The authenticator enables communication between the device and an authentication server, and inhibits the device from other communications until the device is authenticated. If at 804 it is determined that the logon was not successful (NO), processing returns to 802. Otherwise, at 804 logon was successful (YES), the processing continues to 806.

At 806, the session between the device and the original authenticator is established and session keys are generated for the session between the device and the original authenticator. At 808, a session key is sent to the original authenticator.

At 810, the authentication server determines that there is another session for the device. One technique for determining whether there is another session for the device is for the device to send a list to the authentication server of additional sessions, or potential additional sessions. Another technique for determining whether there is another session for the device is to access a database or other record storage system by the authentication server. In one embodiment, the database resides on the authentication server, in another embodiment it resides elsewhere on the network.

At 812, session keys for the other session are generated. At 814, the session key for the other session is sent to the authenticator for the other session. In accordance with an aspect of the present invention, the authenticator for the other session is responsive to receipt of the session key to establishing an authenticated, secure session with the device. This enables the device to immediately communicate with the other session without any additional authentication between the device and the authenticator of the other session. After the session key for the other session has been delivered, the device communicates with the authenticator for the other session using its corresponding session key for the other session. For added security, the authenticator for the other session should be authenticated with the authentication server. This allows the authenticator to ensure that the key received from the authentication server is from a trusted source. Preferably, the authenticator for the other session is authenticated before the device logs on, so that only the key exchange occurs; otherwise, the authentication server would also authenticate the authenticator for the other session before sending the key.

At 816, the session key corresponding to the session key for the device's original authenticator and the session key corresponding to the session key sent to the authenticator for the other session are sent to the device. In a preferred embodiment, the keys are sent at the same time to reduce the number of communications between the device and the authentication server. However, even if the keys are sent separately, the present invention still provides a benefit over prior art systems because the device does not have to perform authentications with the authenticator of the other session, which would entail additional communications between the authenticator of the other session, the authentication server and the device.

It should be noted that steps 812-816 are executed for each session. For multiple sessions they may be executed concurrently.

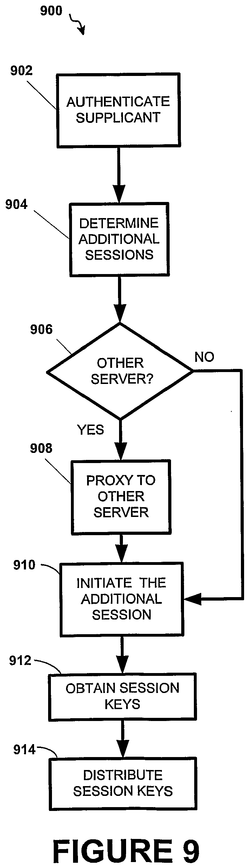

FIG. 9 is a block diagram of a methodology 900 for multi-session establishment involving disjoint authentication and/or authorization servers. At 902, the supplicant is authenticated. The supplicant is authenticated by an authentication server that receives a request from an authenticator to authenticate the supplicant.

At 904, a determination is made whether the supplicant requires additional sessions. There are several techniques that can be employed to make this determination. For example, the supplicant can request that the additional sessions be initiated, e.g., via a list attached to its request to access the network, or via an IE. As another example, the network infrastructure can store a list of applications for the supplicant, e.g., a database accessible by the authentication server.

At 906, the authentication server determines whether it needs (or should) communicate with another server. For example, if the authentication server is part of a server farm and the authentication server's load is reaching a critical load point, the authentication between the supplicant and the additional session can be off loaded and performed by another authentication server. Alternatively, if the authentication server is part of a server farm and reaching a critical load point, another authentication server in the server farm can perform the authentications for the supplicant and for the additional sessions.

In other embodiments, one or more of the application for additional sessions may have an associated authentication server. A remote application for example would likely have its own authentication server.

Furthermore, in other embodiments, one or more of the applications for additional sessions may have associated authorization or policy servers. In these embodiments, the authentication server verifies (authenticates) the supplicant. The authentication server then verifies with the authorization or policy servers whether the supplicant is authorized to access the application.

If at 908 it is determined that at least one other server is needed for the additional session (YES), at 908 the authentication server proxies to the other server and communicates with the other server for the supplicant. Except for when authentication servers are changed for load balancing, communication with the other server for authentication and/or authorization for the supplicant are exchanged between the servers. Otherwise (NO), 910 is performed.

At 910, the additional session is initiated. This may entail authentication of the supplicant, authorization of the supplicant or both. If the additional session requires keys, they are then generated by the appropriate authentication and/or authorization server. At 912, the keys for the additional session are obtained by the authentication server for the supplicant.

At 914, the keys are distributed. If an additional or disjoint server is involved in the additional session, the additional or disjoint server can distribute keys to the application and to the authentication server for the supplicant. The authentication server for the supplicant would then forward the session key for the additional application to the supplicant. The authentication server for the supplicant can forward the key for the additional application to the supplicant along with the session keys established by the authentication server for the supplicant, or the keys can be sent separately.

What has been described above includes exemplary implementations of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the scope of the appended claims interpreted in accordance with the breadth to which they are fairly, legally and equitably entitled.

## Claims

1. A method to optimize authenticated multi-session establishment for a single supplicant, comprising:
authenticating (702) the supplicant with an authentication server using an authenticator of the supplicant; the method being **characterised in that** it comprises:
determining (704), by the authentication server, at least one other session for the supplicant; and
initiating (706), by the authentication server, the at least one other session for the supplicant with an authenticator for the at least one other session.

2. A method according to claim 1, wherein the determining at least one other session further comprises sending a list of the at least one other session from the supplicant to the authentication server.

3. A method according to claim 1, wherein the determining at least one other session further comprises determining that the supplicant is authorized to be initiated with the at least one other session.

4. A method according to claim 1, wherein the determining at least one other session further comprises retrieving a database entry for the supplicant by the authentication server from a database accessible to the authentication server.

5. A method according to claim 1, the initiating at least one other session further comprises:
distributing a first session key to the authenticator of the supplicant for establishing a session between the supplicant and the authenticator of the supplicant;
the initiating the at least one other session for the supplicant further comprises distributing a second session key to the authenticator of the at least one other session; and
distributing a set of keys to the supplicant;
wherein the set of keys comprises a first key corresponding to the first session key and a second key corresponding to the second session key.

6. A method according to claim 1, wherein the at least one other session is authenticated with the authentication server before the supplicant is authenticated for the at least one other session.

7. A method according to claim 1, wherein the supplicant is a wireless access point, the authenticator is a switch port coupling the access point to a backbone network coupling the switch port to the authentication server.

8. A method according to claim 7, wherein one of the at least one other session is established as a session between a wireless domain server and the access point

9. A method according to claim 8, further comprising:
distributing a first session key by the authentication server to the switch port for establishing a session between the access point and the switch port;
the initiating the at least one other session with the wireless domain server further comprises distributing a second session key by the authentication server to the wireless domain server; and
distributing a set of keys to the access point by the authentication server;
wherein the set of keys comprises a first key corresponding to the first session key and a second key corresponding to the second session key.

10. A method for multi-session establishment by an authentication server, comprising:
receiving, by a first authentication server, an authentication request for a supplicant from an authenticator for the supplicant; the method being **characterised in that** it comprises:
determining (704), by the first authentication server, at least one other session for the supplicant; and
initiating (706), by the first authentication server, the at least one other session for the supplicant with a second authentication server for the at least one other session
wherein the first authentication server is configured to act as a proxy server for the second authentication server.

11. A method according to claim 10, wherein the authentication request for the supplicant comprises a list of the at least one other session.

12. A method according to claim 10, further comprising determining that the supplicant is authorized for the at least one other session.

13. A method according to claim 10, wherein the determining at least one other session further comprising retrieving a database entry for the supplicant, the database entry comprising a list of at least one other session for the supplicant.

14. A method according to claim 10, wherein the initiating at least one other session further comprises:
receiving keying data from the second authentication server for the at least one other session; and
forwarding the keying data to the supplicant.

15. A method according to claim 14, wherein the forwarding keying data to the supplicant further comprises forwarding keying data for establishing a session between the supplicant and the authenticator for the supplicant with the keying data for the at least one other session.

16. A method according to claim 10, wherein the supplicant is a wireless access point and the authenticator for the supplicant is a wireless switch coupling the access point to a distribution network.

17. A method according to claim 10, further comprising forwarding the authentication request to another authentication server.

18. A computer-readable medium including executable instructions which, when executed in a processing system, cause the processing system to perform all the steps of a method according to any one of claims 1 to 17.

19. An authentication server, comprising:
means for performing all the steps of a method according to any one of claims 1 to 17.

## Patentansprüche

1. Verfahren zum Optimieren eines authentifizierten Aufbaus mehrerer Sitzungen für einen einzelnen Supplicant, aufweisend:
Authentifizieren (702) des Supplicants mit einem Authentifizierungsserver mittels eines Authentifikators des Supplicants;
wobei das Verfahren **dadurch gekennzeichnet ist, dass** es aufweist:
Bestimmen (704), durch den Authentifizierungsserver, mindestens einer anderen Sitzung für den Supplicant; und
Initiieren (706), durch den Authentifizierungsserver, der mindestens einen anderen Sitzung für den Supplicant mit einem Authentifikator für die mindestens eine andere Sitzung.

2. Verfahren nach Anspruch 1, wobei das Bestimmen mindestens einer anderen Sitzung ferner ein Senden einer Liste der mindestens einen anderen Sitzung vom Supplicant an den Authentifizierungsserver aufweist.

3. Verfahren nach Anspruch 1, wobei das Bestimmen mindestens einer anderen Sitzung ferner ein Bestimmen aufweist, dass der Supplicant autorisiert ist, mit der mindestens einen anderen Sitzung initiiert zu werden.

4. Verfahren nach Anspruch 1, wobei das Bestimmen mindestens einer anderen Sitzung ferner ein Abrufen eines Datenbankeintrags für den Supplicant durch den Authentifizierungsserver aus einer Datenbank aufweist, die für den Authentifizierungsserver zugänglich ist.

5. Verfahren nach Anspruch 1, wobei das Initiieren mindestens einer anderen Sitzung ferner aufweist:
Verteilen eines ersten Sitzungsschlüssels an den Authentifikator des Supplicants für das Aufbauen einer Sitzung zwischen dem Supplicant und dem Authentifikator des Supplicants;
wobei das Initiieren der mindestens einen anderen Sitzung für den Supplicant ferner ein Verteilen eines zweiten Sitzungsschlüssels an den Authentifikator der mindestens einen anderen Sitzung aufweist; und
Verteilen eines Schlüsselsatzes an den Supplicant;
wobei der Schlüsselsatz einen ersten Schlüssel, der dem ersten Sitzungsschlüssel entspricht, und einen zweiten Schlüssel, der dem zweiten Sitzungsschlüssel entspricht, aufweist.

6. Verfahren nach Anspruch 1, wobei die mindestens eine andere Sitzung mit dem Authentifizierungsserver authentifiziert ist, bevor der Supplicant für die mindestens eine andere Sitzung authentifiziert wird.

7. Verfahren nach Anspruch 1, wobei der Supplicant ein Wireless Access Point ist und der Authentifikator ein Switch Port ist, der den Access Point mit einem Backbone-Netz verbindet, das den Switch Port mit dem Authentifizierungsserver verbindet.

8. Verfahren nach Anspruch 7, wobei eine der mindestens einen anderen Sitzung als eine Sitzung zwischen einem drahtlosen Domain Server und dem Access Point aufgebaut ist.

9. Verfahren nach Anspruch 8, ferner aufweisend:
Verteilen eines ersten Sitzungsschlüssels durch den Authentifizierungsserver an den Switch Port für das Aufbauen einer Sitzung zwischen dem Access Point und dem Switch Port;
wobei das Initiieren der mindestens einen anderen Sitzung mit dem drahtlosen Domain Server ferner ein Verteilen eines zweiten Sitzungsschlüssels durch den Authentifizierungsserver an den drahtlosen Domain Server aufweist; und
Verteilen eines Schlüsselsatzes an den Access Point durch den Authentifizierungsserver;
wobei der Schlüsselsatz einen ersten Schlüssel, der dem ersten Sitzungsschlüssel entspricht, und einen zweiten Schlüssel, der dem zweiten Sitzungsschlüssel entspricht, aufweist.

10. Verfahren zum Aufbau mehrerer Sitzungen durch einen Authentifizierungsserver, aufweisend:
Empfangen, durch einen ersten Authentifizierungsserver, einer Authentifizierungsanfrage für einen Supplicant von einem Authentifikator für den Supplicant;
wobei das Verfahren **dadurch gekennzeichnet ist, dass** es aufweist:
Bestimmen (704), durch den ersten Authentifizierungsserver, mindestens einer anderen Sitzung für den Supplicant; und
Initiieren (706), durch den ersten Authentifizierungsserver, der mindestens einen anderen Sitzung für den Supplicant mit einem zweiten Authentifizierungsserver für die mindestens eine andere Sitzung;
wobei der erste Authentifizierungsserver dafür konfiguriert ist, als ein Proxy-Server für den zweiten Authentifizierungsserver zu dienen.

11. Verfahren nach Anspruch 10, wobei die Authentifizierungsanfrage für den Supplicant eine Liste der mindestens einen anderen Sitzung aufweist.

12. Verfahren nach Anspruch 10, ferner aufweisend ein Bestimmen, dass der Supplicant für die mindestens eine andere Sitzung autorisiert ist.

13. Verfahren nach Anspruch 10, wobei das Bestimmen mindestens einer anderen Sitzung ferner ein Abrufen eines Datenbankeintrags für den Supplicant aufweist, wobei der Datenbankeintrag eine Liste mindestens einer anderen Sitzung für den Supplicant aufweist.

14. Verfahren nach Anspruch 10, wobei das Initiieren mindestens einer anderen Sitzung ferner aufweist:
Empfangen von Schlüsselungsdaten vom zweiten Authentifizierungsserver für die mindestens eine andere Sitzung; und
Weiterleiten der Schlüsselungsdaten an den Supplicant.

15. Verfahren nach Anspruch 14, wobei das Weiterleiten von Schlüsselungsdaten an den Supplicant ferner ein Weiterleiten von Schlüsselungsdaten für das Aufbauen einer Sitzung zwischen dem Supplicant und dem Authentifikator für den Supplicant mit den Schlüsselungsdaten für die mindestens eine andere Sitzung aufweist.

16. Verfahren nach Anspruch 10, wobei der Supplicant ein Wireless Access Point ist und der Authentifikator für den Supplicant ein drahtloser Switch ist, der den Access Point mit einem Verteilungsnetz verbindet.

17. Verfahren nach Anspruch 10, ferner aufweisend Weiterleiten der Authentifizierungsanfrage an einen weiteren Authentifizierungsserver.

18. Computerlesbares Medium, das ausführbare Anweisungen enthält, die beim Ausführen in einem Verarbeitungssystem das Verarbeitungssystem dazu veranlassen, alle Schritte eines Verfahrens nach einem der Ansprüche 1 bis 17 durchzuführen.

19. Authentifizierungsserver, aufweisend:
Mittel zum Durchführen aller Schritte eines Verfahrens nach einem der Ansprüche 1 bis 17.

## Revendications

1. Procédé d'optimisation pour l'établissement d'une session multiple authentifiée pour un demandeur unique, comprenant :
l'authentification (702) du demandeur par un serveur d'authentification utilisant un authentificateur du demandeur ;
le procédé étant **caractérisé en ce qu'**il comprend :
la détermination (704), par le serveur d'authentification, d'au moins une autre session pour le demandeur ; et
l'admission (706), par le serveur d'authentification, du demandeur à l'au moins une autre session avec un authentificateur pour l'au moins une autre session.

2. Procédé selon la revendication 1, dans lequel la détermination de l'au moins une autre session comprend l'envoi d'une liste à l'au moins une autre session depuis le demandeur au serveur d'authentification.

3. Procédé selon la revendication 1, dans lequel la détermination de l'au moins une autre session comprend en outre la détermination que le demandeur est autorisé à être admis à l'au moins une autre session.

4. Procédé selon la revendication 1, dans lequel la détermination de l'au moins une autre session comprend en outre l'extraction d'une entrée de base de données pour le demandeur par le serveur d'authentification depuis une base de données accessible au serveur d'authentification.

5. Procédé selon la revendication 1, l'admission à au moins une autre session comprenant en outre :
la distribution d'une première clef de session à l'authentificateur du demandeur pour établir une session entre le demandeur et l'authentificateur du demandeur ;
l'admission du demandeur à l'au moins une autre session comprenant en outre la distribution d'une deuxième clef de session à l'authentificateur de l'au moins une autre session ; et
la distribution d'un jeu de clefs au demandeur ;
où le jeu de clefs comprend une première clef correspondant à la première clef de session et une deuxième clef correspondant à la deuxième clef de session.

6. Procédé selon la revendication 1, dans lequel l'au moins une autre session est authentifiée avec le serveur d'authentification avant que le demandeur soit authentifié pour l'au moins une autre session.

7. Procédé selon la revendication 1, dans lequel le demandeur est un point d'accès sans fil, l'authentificateur est un port de commutation couplant le point d'accès à un réseau de base couplant le port de commutation au serveur d'authentification.

8. Procédé selon la revendication 7, dans lequel une des au moins une autre session est établie comme session entre un serveur de domaine sans fil et le point d'accès.

9. Procédé selon la revendication 8, comprenant en outre :
la distribution d'un première clef de session par le serveur d'authentification pour le port de commutation afin d'établir une session entre le point d'accès et le port de commutation ;
l'initialisation de l'au moins une autre session avec le serveur de domaine sans fil comprend en outre la distribution d'une deuxième clef de session par le serveur d'authentification au serveur de domaine sans fil ; et
la distribution d'un jeu de clefs au point d'accès par le serveur d'authentification ;
où le jeu de clefs comprend une première clef correspondant à la première clef de session et une deuxième clef correspondant à la deuxième session de clef.

10. Procédé d'établissement de session multiple par un serveur d'authentification, comprenant :
la réception, par un premier serveur d'authentification, d'une demande d'authentification pour un demandeur depuis un authentificateur pour le demandeur ;
le procédé étant **caractérisé en ce qu'**il comprend :
la détermination (704), par le premier serveur d'authentification, d'au moins une autre session pour le demandeur ; et
l'admission (706), par le premier serveur d'authentification, du demandeur à l'au moins une autre session avec un deuxième serveur d'authentification pour l'au moins une autre session,
où le premier serveur d'authentification est conçu pour agir comme serveur proxy pour le deuxième serveur d'authentification.

11. Procédé selon la revendication 10, dans lequel la demande d'authentification pour le demandeur comprend une liste de l'au moins une autre session.

12. Procédé selon la revendication 10, comprenant en outre la détermination que le demandeur est autorisé à être admis à l'au moins une autre session.

13. Procédé selon la revendication 10, dans lequel la détermination de l'au moins une autre session comprend en outre l'extraction d'une entrée de base de données pour le demandeur, l'entrée de base de données comprenant une liste d'au moins une autre session pour le demandeur.

14. Procédé selon la revendication 10, l'admission à au moins une autre session comprenant en outre :
la réception de données clefs du deuxième serveur d'authentification pour l'au moins une autre session ; et
le transfert des données clefs au demandeur.

15. Procédé selon la revendication 14, dans lequel le transfert des données clefs au demandeur comprend en outre de transférer des données clefs pour établir une session entre le demandeur et l'authentificateur pour le demandeur avec les données clefs pour l'au moins une autre session.

16. Procédé selon la revendication 10, dans lequel le demandeur est un point d'accès sans fil et l'authentificateur pour le demandeur est un interrupteur sans fil couplant le point d'accès à un réseau de distribution.

17. Procédé selon la revendication 10, comprenant en outre le transfert de la demande d'authentification à un autre serveur d'authentification.

18. Médium lisible par un ordinateur, incluant des instructions exécutables qui, quand elles sont exécutées dans un système d'exploitation, amènent le système d'exploitation à effectuer toutes les étapes d'un procédé selon l'une quelconque des revendications 1 à 17.

19. Serveur d'authentification comprenant .
des moyens pour effectuer toutes les étapes d'un procédé selon l'une quelconque des revendications 1 à 17.
